(19) Europäisches Patentamt
European Patent Office
Office européen des brevets

(11) **EP 4 502 711 A1**

(12) **EUROPEAN PATENT APPLICATION**
published in accordance with Art. 153(4) EPC

(43) Date of publication:
**05.02.2025 Bulletin 2025/06**

(21) Application number: **23774342.2**

(22) Date of filing: **17.02.2023**

(51) International Patent Classification (IPC):
**G02B 30/56** (2020.01)  **G02B 5/00** (2006.01)
**G02B 5/04** (2006.01)  **G02B 5/08** (2006.01)

(52) Cooperative Patent Classification (CPC):
**G02B 30/56; G02B 5/00; G02B 5/04; G02B 5/08;**
G02B 5/045

(86) International application number:
**PCT/JP2023/005798**

(87) International publication number:
**WO 2023/181743 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.03.2022 JP 2022050156**

(71) Applicant: **Toppan Holdings Inc.**
**Tokyo 110-0016 (JP)**

(72) Inventor: **DAIKU, Yasuhiro**
**Tokyo 110-0016 (JP)**

(74) Representative: **TBK**
**Bavariaring 4-6**
**80336 München (DE)**

(54) **OPTICAL ELEMENT FOR AERIAL DISPLAY DEVICE, AND AERIAL DISPLAY DEVICE**

(57)    An optical device (30) for an aerial display apparatus includes a planar base member (31), a plurality of optical elements (32) provided below the base member (31), each extending in a first direction and aligned in a second direction orthogonal to the first direction, a reflection layer (35) provided in each of the optical elements (32) and configured to reflect light, and an absorption layer (36) provided on the reflection layer (35) and configured to absorb light. The optical element (32) has an incident surface and a reflection surface which are inclined with respect to a normal direction of the base member (31) and are in contact with each other. The reflection layer (35) is provided on the reflection surface. The optical device is arranged in such a manner as to receive external light on the incident surface.

F I G. 1

## Description

FIELD

The present invention relates to an optical device for an aerial display apparatus and also to an aerial display apparatus.

BACKGROUND

Aerial display apparatuses capable of displaying still images, moving images, and the like as aerial images have been developed, and are expected to serve as new humanmachine interfaces. For instance, an aerial display apparatus includes a dihedral corner reflector array, in which dihedral corner reflectors are arranged into an array, and reflects light emitted from the display surface of a display device to thereby form a real image in the air. With the display method adopting a dihedral corner reflector array, a real image (aerial image) can be displayed at a plane-symmetric position without an aberration.

Patent Document 1 discloses an optical device using transparent quadrangular prisms that protrude from the surface of a flat transparent plate as dihedral corner reflectors, in which the quadrangular prisms are arranged into an array on a plane. Patent Document 2 discloses an optical device in which first and second light control panels, each of which is formed by vertically aligning a plurality of planar light reflecting portions inside a flat transparent plate, are arranged in such a manner that the planar light reflecting portions of the two panels are orthogonal to each other. In the optical devices disclosed in Patent Documents 1 and 2, the light emitted from the display device is reflected twice upon the orthogonally arranged reflection surfaces to produce an aerial image.

On display apparatuses adopting the optical device of Patent Document 1 or 2, one can recognize an aerial image through an observation from an oblique direction of the optical device. It is difficult, however, to clearly recognize an aerial image when observed from the direction of the normal to the optical device.

CITATION LIST

PATENT LITERATURE

Patent Document 1: Jpn. Pat. Appln. KOKAI Publication No. 2011-191404
Patent Document 2: Jpn. Pat. Appln. KOKAI Publication No. 2011-175297

SUMMARY

TECHNICAL PROBLEM

The present invention is to provide an optical device for an aerial display apparatus capable of improving a display quality and to provide such an aerial display apparatus.

SOLUTION TO PROBLEM

A first aspect of the present invention provides an optical device for an aerial display apparatus that forms an aerial image in an aerial space, the optical device comprising:

a planar base member;
a plurality of optical elements provided below the base member, each extending in a first direction and aligned in a second direction orthogonal to the first direction;
a reflection layer provided in each of the optical elements and configured to reflect light; and
an absorption layer provided on the reflection layer and configured to absorb light,
wherein each of the optical elements has an incident surface and a reflection surface which are inclined with respect to a normal direction of the base member and are in contact with each other,
the reflection layer is provided on the reflection surface, and
the optical device is arranged in such a manner as to receive external light on the incident surface.

A second aspect of the present invention provides the optical device according to the first aspect, wherein the reflection layer is formed of aluminum (Al), silver (Ag), or an alloy containing one of them.

A third aspect of the present invention provides the optical device according to the first aspect, wherein the absorption layer is formed of a material containing a black dye or pigment, a material containing carbon black, or a material containing graphite.

A fourth aspect of the present invention provides an aerial display apparatus comprising:

a display device configured to display an image; and
the optical device according to claim 1 arranged to receive light from the display device on the incident surface.

A fifth aspect of the present invention provides the aerial display apparatus according to the fourth aspect, wherein the display device and the optical device are arranged in parallel to each other.

A sixth aspect of the present invention provides the aerial display apparatus according to the fourth aspect, further comprising:

a lighting device configured to produce light,
wherein the display device is arranged to receive light from the lighting device and is configured by a liquid crystal display device.

ADVANTAGEOUS EFFECTS OF INVENTION

According to the present invention, an optical device for an aerial display apparatus capable of improving a display quality, as well as such an aerial display apparatus, can be provided.

BRIEF DESCRIPTION OF THE DRAWINGS

FIG. 1 is a perspective view of an aerial display apparatus according to the first embodiment of the present invention.
FIG. 2 is a side view of the aerial display apparatus shown in FIG. 1 from a Y direction.
FIG. 3 is a perspective view of an optical device shown in FIG. 1.
FIG. 4 is a block diagram of the aerial display apparatus.
FIG. 5 is a perspective view illustrating the state of light reflection on the optical device.
FIG. 6 is an XZ-plane side view illustrating the state of light reflection on the optical device.
FIG. 7 is a YZ-plane side view illustrating the state of light reflection on the optical device.
FIG. 8 is a diagram illustrating angular conditions of an incident surface and a reflection surface of the optical device.
FIG. 9 is a ray tracing diagram of the aerial display apparatus.
FIG. 10 is a chart of light distribution based on the ray tracing diagram of FIG. 9.
FIG. 11 is a ray tracing diagram of light components forming an aerial image in light emitted from point "o" of the display device.
FIG. 12 is a chart of light distribution based on the ray tracing diagram of FIG. 11.
FIG. 13 is a cross-sectional view illustrating a method of manufacturing the optical device according to the first example.
FIG. 14 is a cross-sectional view illustrating the manufacturing method subsequent to FIG. 13.
FIG. 15 is a cross-sectional view illustrating a method of manufacturing an optical device according to the second example.
FIG. 16 is a cross-sectional view illustrating the manufacturing method subsequent to FIG. 15.
FIG. 17 is a cross-sectional view illustrating the manufacturing method subsequent to FIG. 16.
FIG. 18 is a cross-sectional view illustrating the manufacturing method subsequent to FIG. 17.
FIG. 19 is a cross-sectional view illustrating the manufacturing method subsequent to FIG. 18.
FIG. 20 is a cross-sectional view illustrating the manufacturing method subsequent to FIG. 19.
FIG. 21 is a side view of an aerial display apparatus according to the second embodiment of the present invention.

DETAILED DESCRIPTION

Embodiments will be described below with reference to the drawings. These drawings are schematically or conceptually illustrated, and the dimensions, ratios, and the like in each drawing may not always be the same as actual dimensions and ratios. Further, among the drawings illustrating the same portion, the dimensional relationships or ratios may differ from each other. In particular, the embodiments described below exemplify a device and a method that embody the technical idea of the present invention, and therefore the technical idea of the present invention should not be identified by the shape, configuration, arrangement, etc. of the structural components. In the description below, the same reference numerals are given to elements having the same functions and configurations, and redundant explanations may be omitted.

(1) First Embodiment

(1-1) Configuration of Aerial Display Apparatus 1

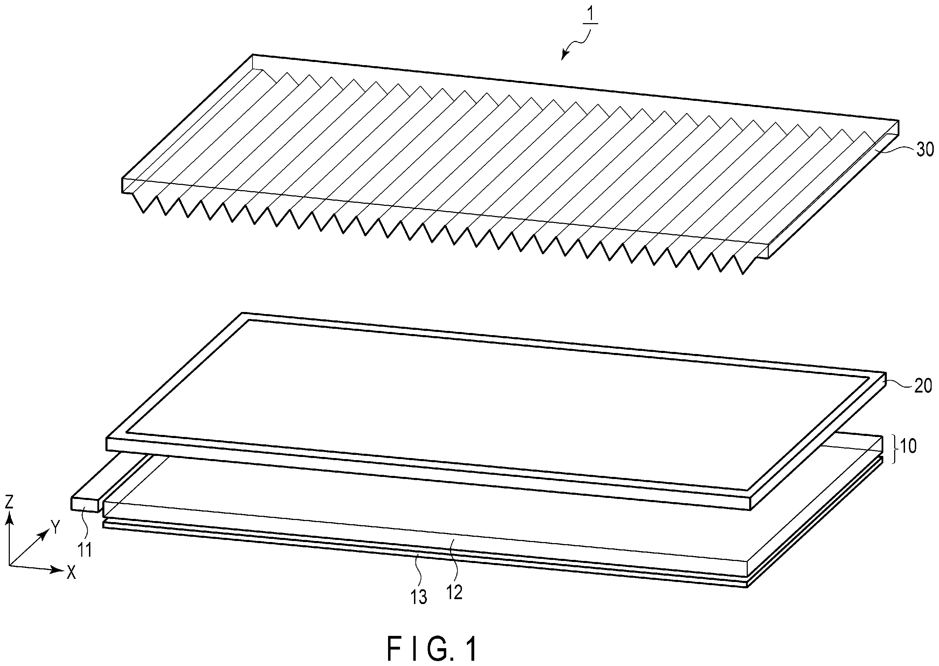

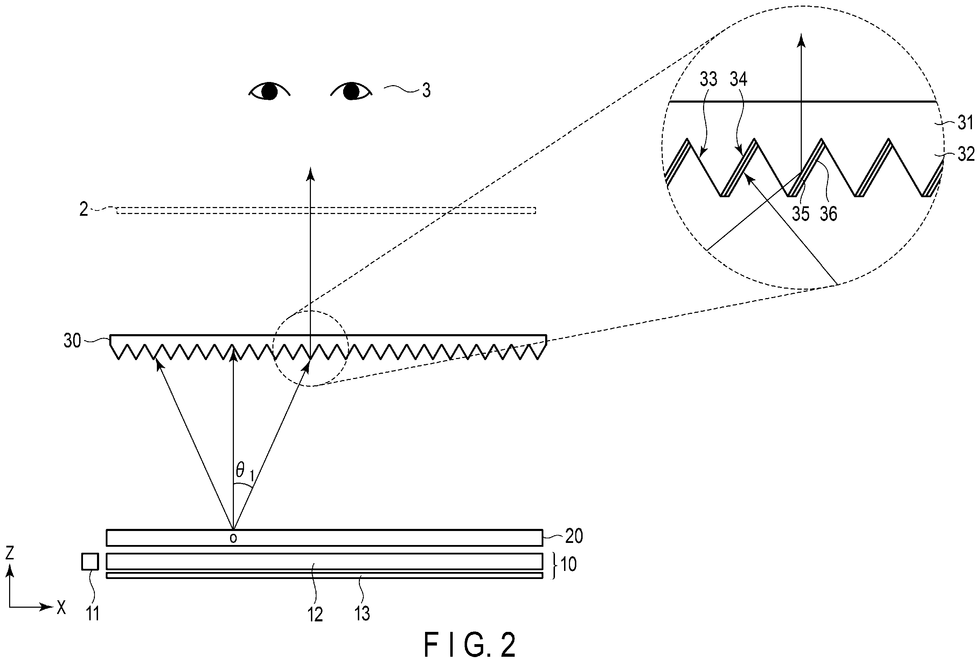

FIG. 1 is a perspective view of an aerial display apparatus 1 according to the first embodiment of the present invention. In FIG. 1, the X direction represents a direction along one side of the aerial display apparatus 1, the Y direction represents a direction orthogonal to the X direction on a horizontal plane, and the Z direction represents a direction orthogonal to the XY plane (also referred to as a normal direction). FIG. 2 is a side view of the aerial display apparatus 1 shown in FIG. 1 when viewed from a Y direction.

The aerial display apparatus 1 denotes an apparatus that displays images (including moving images). The aerial display apparatus 1 displays an aerial image in an aerial space above the light emitting surface of the apparatus itself. The light emitting surface of the aerial display apparatus 1 denotes a surface of a component disposed in the uppermost layer of multiple components that constitute the aerial display apparatus 1. An aerial image denotes a real image formed in the aerial space.

The aerial display apparatus 1 includes a lighting device (also referred to as a backlight) 10, a display device 20, and an optical device 30. The lighting device 10, the display device 20, and the optical device 30 are arranged in parallel to each other. The lighting device 10, the display device 20, and the optical device 30 are accommodated in a housing that is not shown, and are fixed at the positions indicated in FIG. 1 by support members (not shown).

The lighting device 10 produces illumination light and outputs the illumination light toward the display device 20. The lighting device 10 includes a light source unit 11, a light guide plate 12, and a reflective sheet 13. The lighting device 10 may be a sidelight-type lighting device. The lighting device 10 forms a surface light source. The lighting device 10 may be configured in such a manner that the light intensity in an oblique direction at the angle $\theta_1$ described later reaches its peak.

The light source unit 11 is disposed so as to face the side surface of the light guide plate 12. The light source unit 11 produces light toward the side surface of the light guide plate 12. The light source unit 11 includes a plurality of light emitting elements formed of, for example, a white light emitting diode (LED). The light guide plate 12 guides the illumination light from the light source unit 11 and outputs the illumination light from the upper surface thereof. The reflective sheet 13 reflects the illumination light output from the bottom surface of the light guide plate 12 toward the light guide plate 12 again. The lighting device 10 may include an optical device (including a prism sheet and a diffusion sheet) for improving optical characteristics on the upper surface of the light guide plate 12.

The display device 20 is a transmissive display device. The display device 20 is configured by, for example, a liquid crystal display device. The driving mode of the display device 20 is not particularly limited, and a twisted nematic (TN) mode, a vertical alignment (VA) mode, a homogeneous mode, or the like, can be used. The display device 20 receives the illumination light output from the lighting device 10. The display device 20 transmits the illumination light from the lighting device 10 and performs optical modulation. The display device 20 thereby displays a desired image on its display surface.

The optical device 30 reflects light incident from the bottom surface side to the upper surface side. The optical device 30 may also reflect the light obliquely incident from the bottom surface side, for example, in the front direction (normal direction). The detailed configuration of the optical device 30 will be described later. The optical device 30 forms an aerial image 2 in the aerial space. The aerial image 2 is a two-dimensional image parallel to the device surface of the optical device 30. The device surface denotes a virtual plane on which the optical device 30 extends in an in-plane direction. The device surface has the same meaning as an in-plane direction of the device. The same applies to the device surfaces of other devices. A viewer 3 in front of the optical device 30 can visually recognize the aerial image 2.

(1-2) Configuration of Optical Device 30

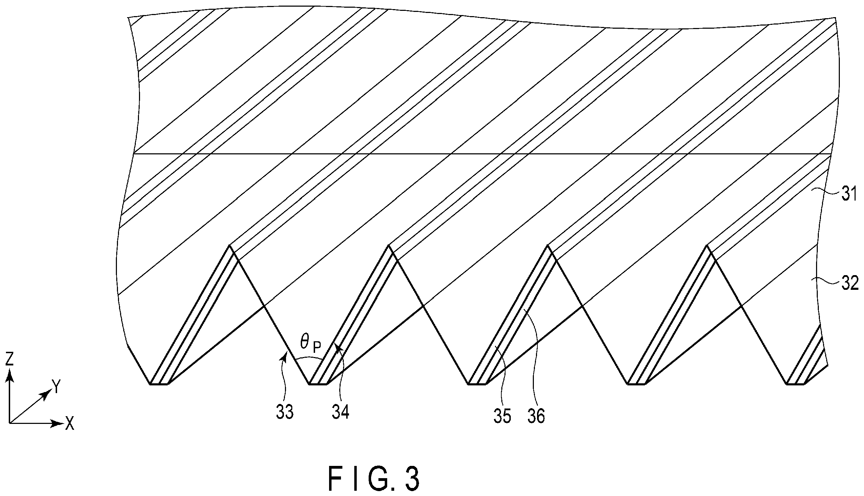

FIG. 3 is a perspective view of the optical device 30 shown in FIG. 1. FIG. 2 also shows a side view of a part of the optical device 30 in an enlarged manner.

The optical device 30 includes a base member 31 and a plurality of optical elements 32. The base member 31 is formed to be planar on the XY plane and has a rectangular parallelepiped shape.

A plurality of optical elements 32 are provided on the bottom surface of the base member 31. Each of the optical elements 32 is formed to be a triangular prism. The optical elements 32 are disposed such that the three side surfaces of each triangular prism extend parallel to the XY plane with one of the side surfaces being in contact with the base member 31. The optical elements 32 each extend in the Y direction and are aligned in the X direction. In other words, the optical elements 32 form a sawtooth shape.

Each of the optical elements 32 has an incident surface 33 and a reflection surface 34. When viewed from the Y direction, the left side surface is the incident surface 33 and the right side surface is the reflection surface 34. Upon the incident surface 33, light from the display device 20 is incident. Upon the reflection surface 34, the light externally incident on the incident surface 33 is reflected in the interior of the optical element 32. The incident surface 33 and the reflection surface 34 have an angle $\theta_p$.

The optical elements 32 may be formed integrally with the base member 31, using the same transparent material as the base member 31. The base member 31 and the optical elements 32 may be formed separately, and the optical elements 32 may be adhered to the base member 31, using a transparent adhesive. Examples of the transparent material for the base member 31 and the optical elements 32 include an acrylic resin or glass.

In the optical element 32, the reflection surface 34 is provided with a reflection layer 35. The reflection layer 35 is formed to cover the entire reflection surface 34. The reflection layer 35 has a function of reflecting light. The reflection layer 35 is formed of a material having a high reflectance. The reflection layer 35 is formed of, for example, aluminum (Al), silver (Ag), or an alloy containing one of them.

An absorption layer 36 is provided on the reflection layer 35. The absorption layer 36 is formed to cover the entire reflection layer 35. The absorption layer 36 has a function of absorbing light. The absorption layer 36 is formed of a material having a high light absorption rate. The absorption layer 36 is formed of, for example, a material containing a black dye or pigment, a material containing carbon black, or a material containing graphite.

The optical device 30 internally reflects incident light and thereby forms a real image in the aerial space. The optical device 30 forms a real image at a position in front of its device surface.

(1-3) Block Configuration of Aerial Display Apparatus 1

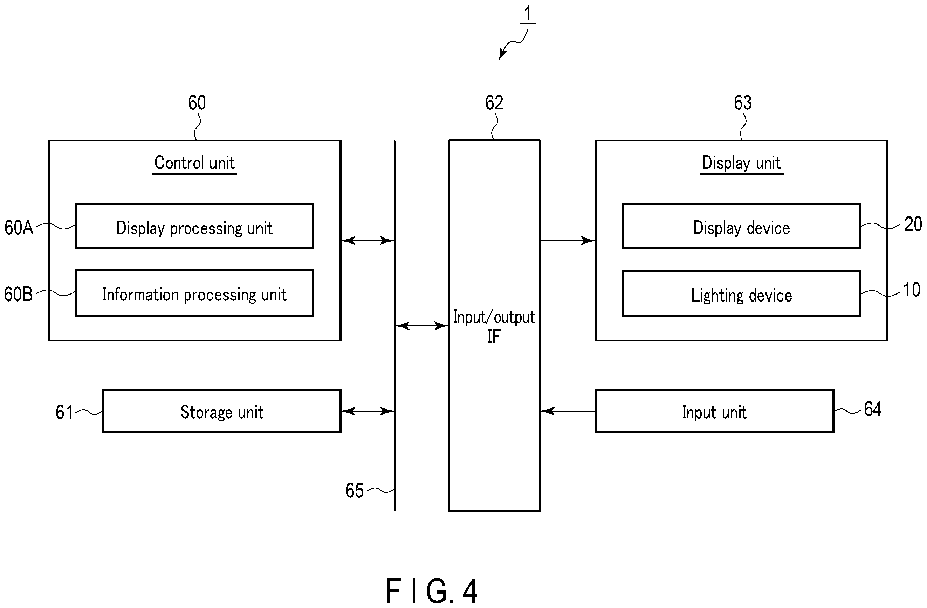

FIG. 4 is a block diagram of the aerial display apparatus 1. The aerial display apparatus 1 includes a control unit 60, a storage unit 61, an input/output interface (input/output IF) 62, a display unit 63, and an input unit 64. The control unit 60, the storage unit 61, and the input/output interface 62 are connected to each other via a bus 65.

The input/output interface 62 is connected to the display unit 63 and the input unit 64. The input/output interface 62 performs interface processing corresponding to a predetermined standard respectively on the display unit 63 and the input unit 64.

The display unit 63 includes the lighting device 10 and the display device 20. The display unit 63 displays an image.

The control unit 60 is configured by one or more processors such as a central processing unit (CPU) or a micro processing unit (MPU). The control unit 60 realizes various functions by executing programs stored in the storage unit 61. The control unit 60 includes a display processing unit 60A and an information processing unit 60B.

The display processing unit 60A controls the operation of the display unit 63 (in particular, the lighting device 10 and the display device 20). The display processing unit 60A controls ON and OFF of the lighting device 10. The display processing unit 60A transmits an image signal to the display device 20 to cause the display device 20 to display an image.

The information processing unit 60B produces an image to be displayed by the aerial display apparatus 1. The information processing unit 60B can use image data stored in the storage unit 61. The information processing unit 60B may acquire image data from the outside by using a communication function (not shown).

The storage unit 61 includes a nonvolatile storage device such as a read only memory (ROM), a hard disk drive (HDD), and a solid state drive (SSD), and a volatile storage device such as a random access memory (RAM) and a register. The storage unit 61 stores programs executed by the control unit 60. The storage unit 61 stores various data necessary for control of the control unit 60. The storage unit 61 stores data of an image to be displayed by the aerial display apparatus 1.

The input unit 64 receives information input by the user. The information processing unit 60B can select an image to be displayed on the display unit 63 based on information received by the input unit 64.

(1-4) Operation of Aerial Display Apparatus 1

Next, the operation of the aerial display apparatus 1 configured as above will be described.

The arrows in FIG. 2 represent optical paths. As shown in FIG. 2, the light emitted from the point "o" of the display device 20 is incident on the optical device 30. In the light emitted from the display device 20, a light component at the angle $\theta_1$ (including light components in a predetermined angular range defined around the angle $\theta_1$) is reflected on the optical device 30. The optical device 30 forms an image of the incident light in the aerial space on the side opposite to the display device 20 and displays an aerial image 2 in the aerial space.

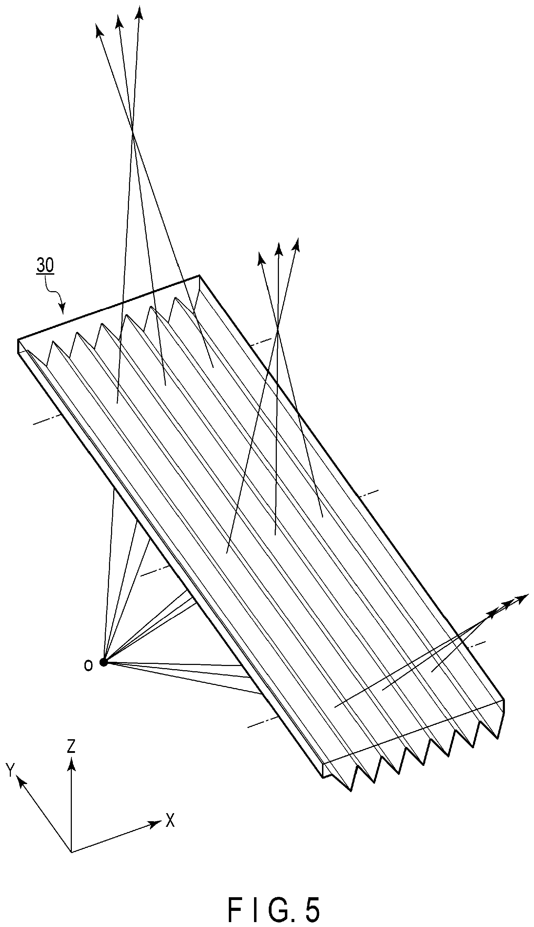

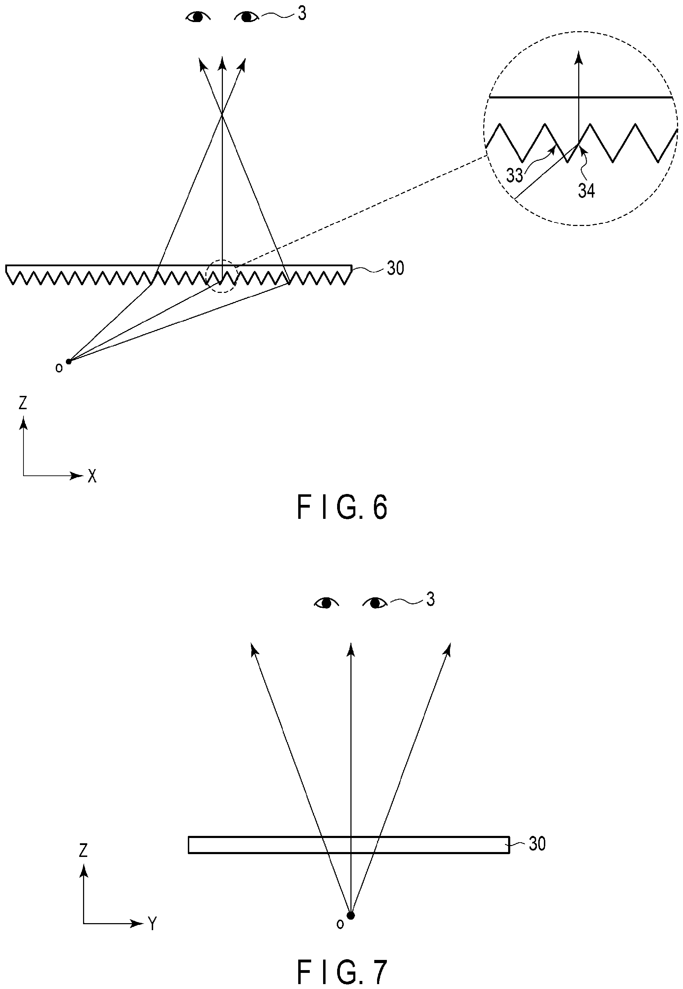

FIG. 5 is a perspective view illustrating the state of light reflection on the optical device 30. FIG. 6 is an XZ-plane side view illustrating the state of light reflection on the optical device 30. In FIG. 6, the optical device 30 is viewed with both eyes (i.e., a line connecting both eyes) of the viewer 3 being parallel to the X direction. FIG. 7 is a YZ-plane side view illustrating the state of light reflection on the optical device 30. In FIG. 7, the optical device 30 is viewed with both eyes of the viewer 3 being parallel to the Y direction. In FIGS. 5 to 7, illustration of the reflection layer 35 or the absorption layer 36 is omitted.

The light emitted from an arbitrary point "o" on the device surface of the display device 20 enters the incident surface 33 of the optical device 30 and reaches the reflection surface 34. The light that has entered the reflection surface 34 is totally reflected on the reflection surface 34 and is output from the side of the plane of the optical device 30 opposite to the side of the optical elements 32.

In the XZ plane of FIG. 6, the light emitted from the point "o" is totally reflected on the reflection surfaces 34 of the optical elements 32. The light produces an aerial image in the aerial space.

In the YZ plane of FIG. 7, the light emitted from the point "o" is not reflected on the reflection surfaces 34 of the optical elements 32, performing no image formation in the aerial space. The light therefore does not contribute to the formation of an aerial image.

That is, the condition under which the viewer 3 can recognize an aerial image is when both eyes of the viewer 3 are parallel to the X direction or approximately parallel (e.g., $\pm 10$ degrees with respect to the X direction). Furthermore, in the state of both eyes of the viewer 3 being parallel to or approximately parallel to the X direction, if the viewpoint is shifted along the Y direction, an aerial image can always be recognized.

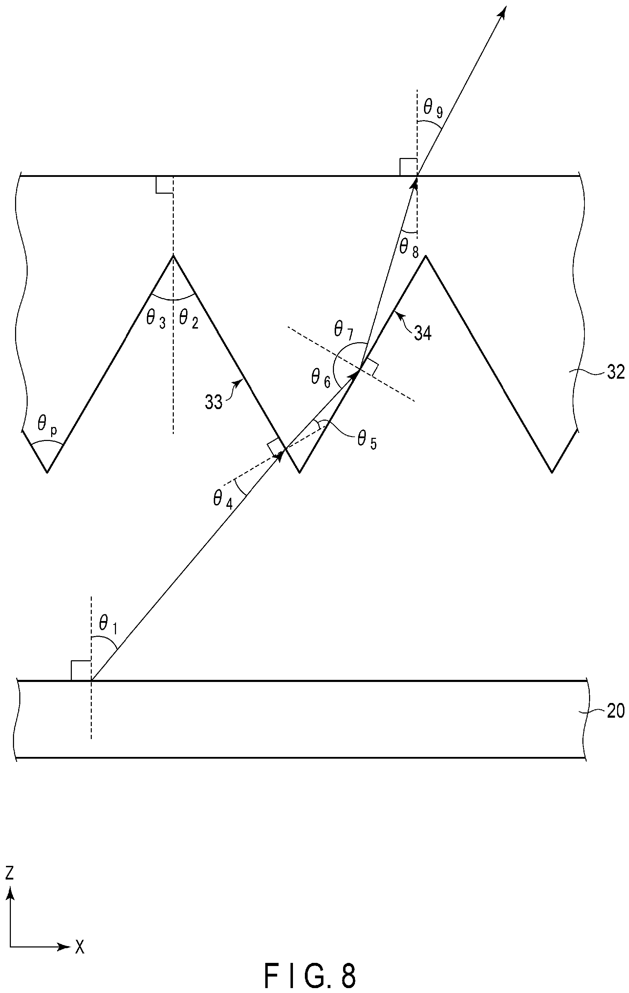

FIG. 8 is a diagram illustrating angular conditions of the incident surface 33 and the reflection surface 34 of the optical device 30.

It is assumed that the angle of the incident surface 33 with respect to the Z direction (the direction perpendicular to the device surface) is $\theta_2$, the angle of the reflection surface 34 with respect to the Z direction is $\theta_3$, and the angle between the incident surface 33 and the reflection surface 34 is $\theta_p$. The angle $\theta_p$ can be expressed by the following equation (1):

$$\theta_p \;=\; \theta_2 + \theta_3 \qquad (1)$$

The light emitted from the display device 20 at the angle $\theta_1$ is incident on the incident surfaces 33. It is assumed that the refractive index of the material of the optical device 30 is $n_p$, and the refractive index of air is 1. On the incident surface 33, the incident angle is $\theta_4$, and the refraction angle is $\theta_5$. On the reflection surface 34, the incident angle is $\theta_6$, and the refraction angle is $\theta_7$ ($=\theta_6$). On the upper surface of the optical device 30, the incident angle is $\theta_8$, and the refraction angle is $\theta_9$. The refraction angle $\theta_9$ is the output angle. The output angle $\theta_9$ can be expressed by the following equation (2):

$$\theta_9 = \sin^{-1}(n_p * \sin(\sin^{-1}((1/n_p) * \sin(90° - (\theta_1 + \theta_2))) + \theta_2 + 2\theta_3 - 90°)) \qquad (2)$$

The light incident on the incident surface 33 is set so as to cause no total reflection on the incident surface 33. That is, the angle $\theta_2$ of the incident surface 33 is determined such that the incident angle of the light incident on the incident surface 33 is smaller than the critical angle. The critical angle denotes the smallest angle of incidence beyond which total reflection occurs. The critical angle is the angle relative to the normal of the incident surface.

Herein, as shown in FIG. 2, in the optical device 30, the reflection surface 34 is provided with the reflection layer 35 and the absorption layer 36. The light that has entered the incident surface 33 and reached the reflection surface 34 is reflected on the reflection surface 34 and the reflection layer 35. Specifically, of the light incident on the optical device 30, a light component on the side in which the reflection surface 34 is inclined with respect to the direction (Z direction) perpendicular to the device surface of the optical device 30 is incident on the incident surface 33 and then reflected on the reflection surface 34 and the reflection layer 35. In other words, of the light incident on the optical device 30, a light component traveling obliquely to the right side with respect to the Z direction in FIG. 2 is incident on the incident surface 33 and then reflected on the reflection surface 34 and the reflection layer 35. Furthermore, because of the presence of the reflection layer 35, the light that has reached the reflection surface 34 is reflected in a more reliable manner.

On the other hand, the light directly incident on the absorption layer 36 from the outside of the optical device 30 is absorbed by the absorption layer 36. Specifically, of the light incident on the optical device 30, a light component on the side in which the incident surface 33 is inclined with respect to the direction (Z direction) perpendicular to the device surface of the optical device 30 is absorbed by the absorption layer 36. In other words, of the light incident on the optical device 30, a light component traveling obliquely to the left side with respect to the Z direction in FIG. 2 is absorbed by the absorption layer 36. Therefore, the light directly incident on the absorption layer 36 is not reflected on the optical device 30 and is not visually recognized by the viewer 3.

In this manner, the optical device 30 functions to reflect only light for producing the aerial image 2 and not to reflect the other light. That is, the optical device 30 can block unnecessary light that does not contribute to production of the aerial image 2.

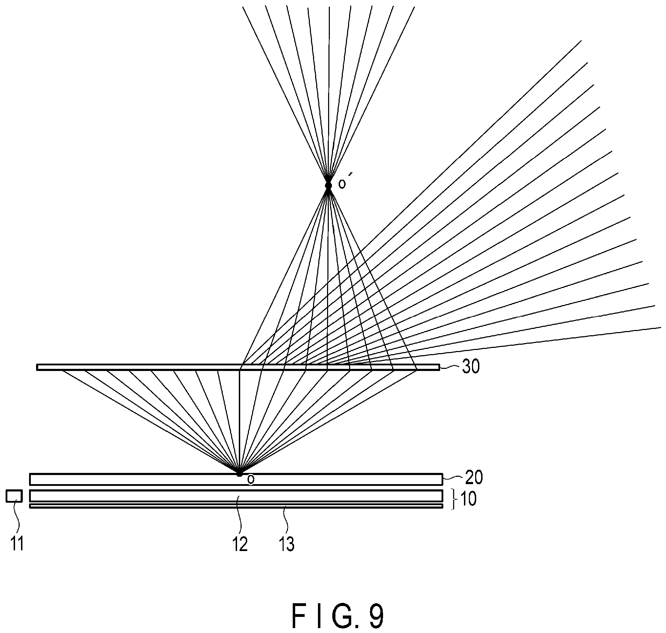

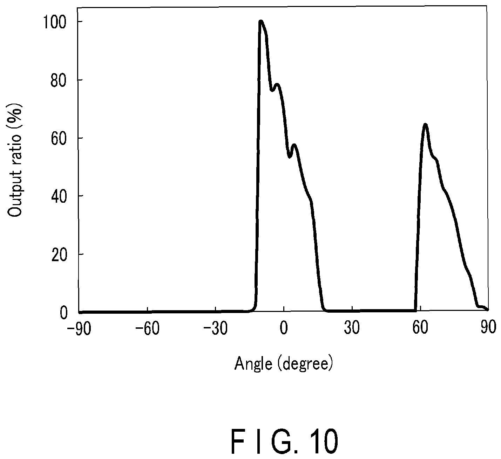

FIG. 9 is a ray tracing diagram of the aerial display apparatus 1. FIG. 10 is a chart of light distribution based on the ray tracing diagram of FIG. 9. The horizontal axis of FIG. 10 represents the angle (in degrees) at which the viewer observes the optical device 30 along the X direction, and the vertical axis represents the light output ratio (in percentage).

Of the light emitted from the point "o" of the display device 20, a light component on the right side from the Z direction is reflected on the optical device 30 to form an image at the point "o'". On the other hand, of the light emitted from the point "o" of the display device 20, a light component on the left side from the Z direction is absorbed by the absorption layer 36 of the optical device 30 and is not output from the optical device 30.

FIGS. 9 and 10 show that the output ratio increases when the aerial display apparatus 1 is viewed at 0 degrees, or in other words, viewed from the front direction. The viewer can visually recognize the aerial image in an observation from the front direction. The unnecessary light not contributing to display (light components traveling in the rightward oblique direction from the optical device 30) is also emitted from the optical device 30.

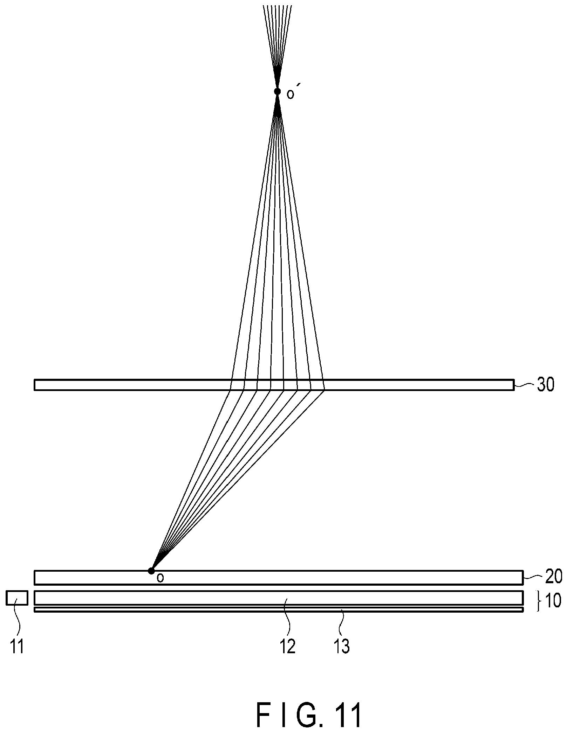

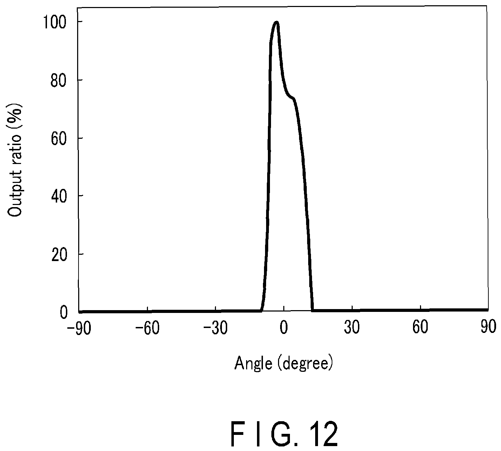

FIG. 11 is a ray tracing diagram of light components forming an aerial image in the light emitted from the point "o" of the display device 20. FIG. 12 is a chart of light distribution based on the ray tracing diagram of FIG. 11.

FIGS. 11 and 12 also show that the output ratio increases when the aerial display apparatus 1 is viewed from the front direction. The viewer can visually recognize the aerial image in an observation from the front direction.

(1-5) Manufacturing Method

Next, a method of manufacturing the optical device 30 will be described. Two embodiments (first and second embodiments) of the manufacturing method will be described below.

(First Example)

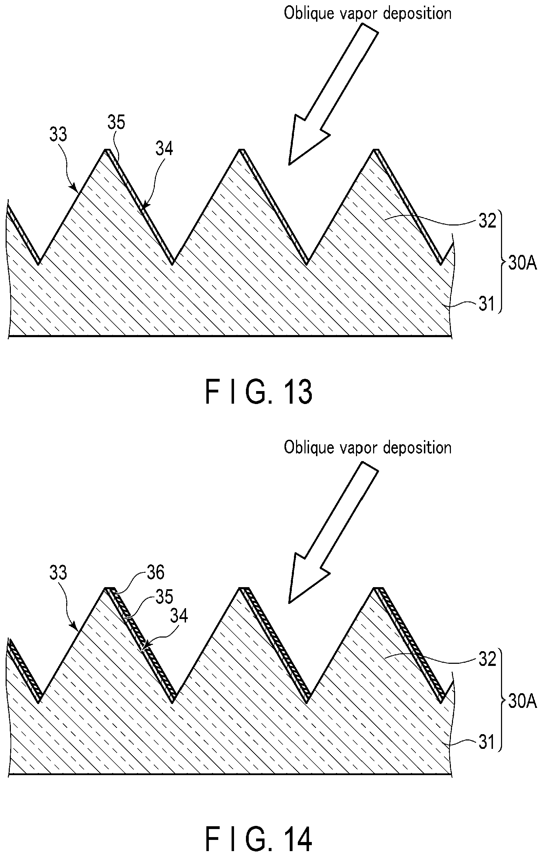

FIGS. 13 and 14 are each a cross-sectional view illustrating a method of manufacturing the optical device 30 according to the first example.

As shown in FIG. 13, an optical device 30 provided with neither a reflection layer 35 nor an absorption layer 36 is prepared. The optical device 30 provided with neither a reflection layer 35 nor an absorption layer 36 will be referred to as an optical device member 30A. The optical device member 30A is a member including a base member 31 and a plurality of optical elements 32. Each optical element 32 has an incident surface 33 and a reflection surface 34. The optical device member 30A is manufactured using an arbitrary manufacturing method. The optical device member 30A is arranged such that the optical elements 32 face upward.

Subsequently, a reflection layer 35 is formed on a reflection surface 34 of the optical element 32 using an oblique vapor deposition method. The oblique vapor deposition method is a vapor deposition method in which a vapor deposition material is introduced obliquely with respect to a device surface of an object to be vapor-deposited to thereby form a film of the vapor deposition material on the object to be vapor-deposited. The vapor deposition is, for example, a processing method in which a vapor deposition material is evaporated in a vacuum and is attached to an object to be vapor-deposited in a thin film state. The oblique direction is an oblique direction with respect to the normal of the device surface of the optical device member 30A, and is a direction inclined to the normal side (the right side in FIG. 13) of the reflection surface 34 of the optical element 32 with respect to the normal of the device surface of the optical device member 30A. In other words, the oblique direction is a direction in which the vapor deposition material can be applied to the reflection surface 34. The reflection layer 35 is formed of, for example, aluminum (Al), silver (Ag), or an alloy containing one of them.

Next, as shown in FIG. 14, an absorption layer 36 is formed on the reflection layer 35 using the oblique vapor deposition method. The absorption layer 36 is obliquely vapor-deposited from the direction in which the vapor deposition material can be applied to the reflection layer 35. The absorption layer 36 is formed of, for example, a material containing a black dye or pigment, a material containing carbon black, or a material containing graphite.

In this manner, a laminated film of the reflection layer 35 and the absorption layer 36 can be formed on the reflection surface 34. Furthermore, by using the oblique vapor deposition method, it is possible to suppress the vapor deposition material from adhering to the incident surface 33.

(Second Example)

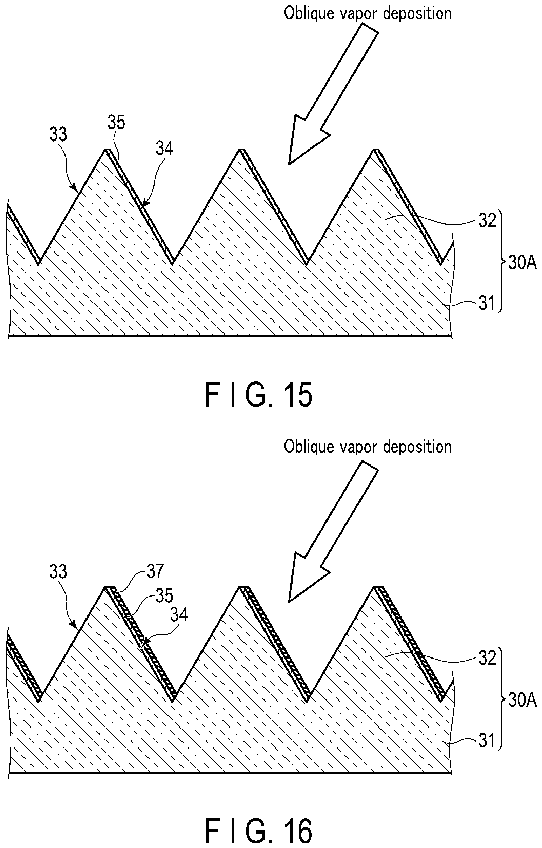

FIGS. 15 to 20 are each a cross-sectional view illustrating the method of manufacturing the optical device 30 according to the second example.

As shown in FIG. 15, an optical device member 30A provided with neither a reflection layer 35 nor an absorption layer 36 is prepared. The optical device member 30A is arranged such that the optical elements 32 face upward.

Subsequently, a reflection layer 35 is formed on a reflection surface 34 of the optical element 32 using the oblique vapor deposition method. The material of the reflection layer 35 is the same as that of the first example.

Next, as shown in FIG. 16, a hydrophilic layer 37 is formed on the reflection layer 35 using the oblique vapor deposition method or a coating method. The hydrophilic layer 37 is obliquely vapor-deposited from the direction in which the vapor deposition material can be applied to the reflection layer 35. The hydrophilic layer 37 is a layer having affinity with water. The hydrophilic layer 37 is formed of, for example, calcium phosphate or a compound containing calcium phosphate.

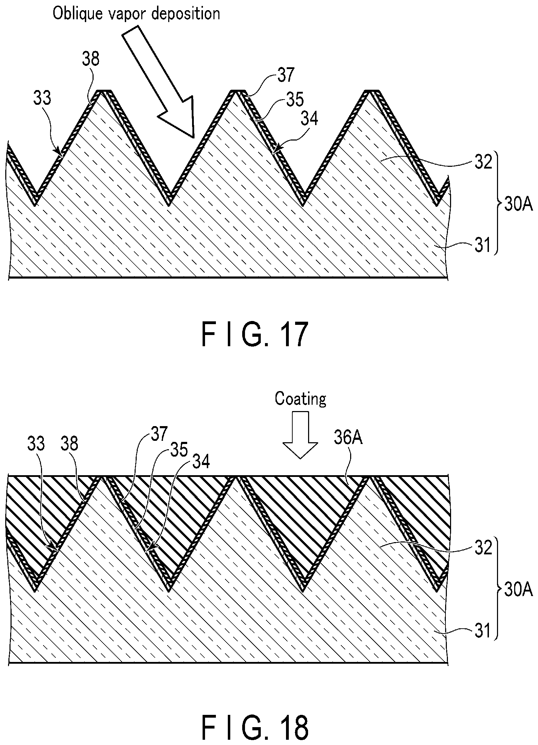

Next, as shown in FIG. 17, a hydrophobic layer 38 is formed on the incident surface 33 of the optical element 32 using the oblique vapor deposition method or the coating method. The hydrophobic layer 38 is obliquely vapor-deposited from the direction in which the vapor deposition material can be applied to the incident surface 33. The oblique direction in vapor deposition of the hydrophobic layer 38 is an oblique direction with respect to the normal of the device surface of the optical device member 30A, and is a direction inclined to the normal side (the left side in FIG. 17) of the incident surface 33 of the optical element 32 with respect to the normal of the device surface of the optical device member 30A. The hydrophobic layer 38 is a layer having no affinity with water. The hydrophobic layer 38 is formed of, for example, fluorine resin or a compound containing fluorine.

Next, as shown in FIG. 18, a black paint 36A is formed on the optical device member 30A using a coating method or a printing method. The black paint 36A is formed so as to fill grooves formed by the plurality of optical elements 32. The black paint 36A is in contact with the hydrophilic layer 37 and the hydrophobic layer 38. The black paint 36A is formed by mixing a black dye, a black pigment, or another black material with a liquid having volatility.

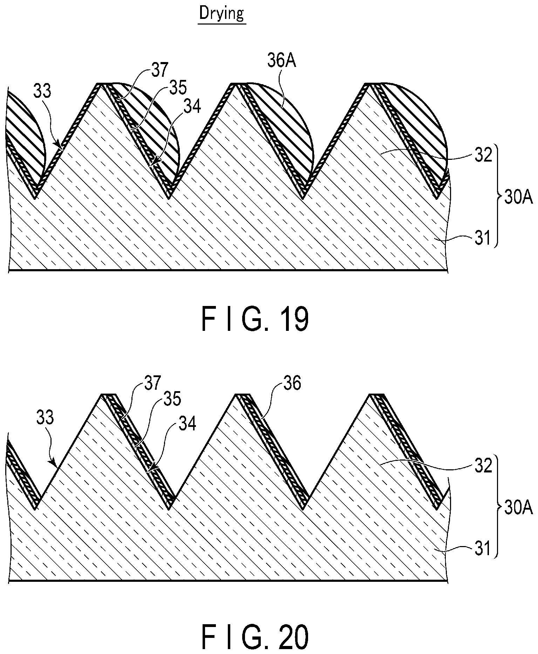

Next, as shown in FIG. 19, the black paint 36A is dried. As a volatile component decreases, the black paint 36A selectively aggregates in the hydrophilic layer 37 because of the difference in surface free energy between the hydrophilic layer 37 and the hydrophobic layer 38.

Next, as shown in FIG. 20, upon elimination of the volatile component of the black paint 36A, a flat absorption layer 36 is formed on the reflection layer 35. In the manufacturing method of the second example, a laminated film in which the reflection layer 35, the hydrophilic layer 37, and the absorption layer 36 are laminated in this order is formed on the reflection surface 34.

(1-6) Effects of First Embodiment

According to the first embodiment, the light emitted from the display device 20 is reflected on the optical device 30, and thus an aerial image can be displayed in an aerial space. Moreover, it is possible to display an aerial image in the front direction of the aerial display apparatus 1.

Furthermore, an unnecessary light component not contributing to the display of the aerial image can be absorbed by the absorption layer 36. That is, it is possible to suppress an output of an unnecessary light component not contributing to the display of the aerial image from the optical device 30. This can realize an aerial display apparatus 1 capable of improving a display quality.

In addition, the viewer 3 can visually recognize an aerial image when observing the optical device 30 in a state of both his/her eyes being parallel to or approximately parallel to the X direction (i.e., the direction of the optical elements 32 being aligned). Furthermore, an aerial image can be continuously recognized when the viewer 3 shifts the viewpoint along the Y direction in a state of both his/her eyes being parallel to or approximately parallel to the X direction. That is, it is possible to secure a viewing angle in a state of both eyes of the viewer 3 being parallel to or approximately parallel to the X direction.

In addition, a plurality of elements constituting the aerial display apparatus 1 can be arranged in parallel. This can realize an aerial display apparatus 1 that is downsized in the Z direction.

(2) Second Embodiment

The second embodiment relates to configuration examples in which the display device 20 is disposed obliquely with respect to the optical device 30.

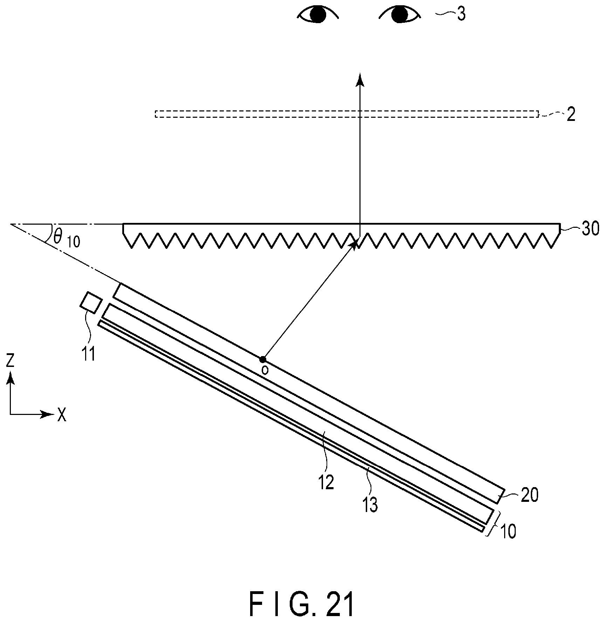

FIG. 21 is a side view of an aerial display apparatus 1 according to the second embodiment of the present invention. In FIG. 21, the X direction represents a direction along one side of the optical device 30, the Y direction represents a direction orthogonal to the X direction on a horizontal plane of the optical device 30, and the Z direction represents a direction orthogonal to an XY plane.

The aerial display apparatus 1 includes a lighting device 10, a display device 20, and an optical device 30. The configurations of the lighting device 10, the display device 20, and the optical device 30 are the same as those in the first embodiment. The lighting device 10 and the display device 20 are arranged in parallel to each other.

The optical device 30 is arranged obliquely at an angle $\theta_{10}$ with respect to the display device 20. In the second embodiment, the angle $\theta_{10}$ is set to be in a range of larger than 0 degrees and smaller than 45 degrees.

As shown in FIG. 21, the light emitted from the point "o" of the display device 20 is reflected on the optical device 30 to form an aerial image 2 in an aerial space. Furthermore, as in the first embodiment, the light component traveling to the left side from the direction perpendicular to the device surface of the optical device 30 is absorbed by the absorption layer 36 provided in the optical device 30.

According to the second embodiment, the aerial display apparatus 1 can be realized by arranging the display device 20 obliquely with respect to the optical device 30. Other effects are the same as those of the first embodiment.

In each of the embodiments described above, the left side surface of the optical element 32 is defined as the incident surface 33, and the right side surface is defined as the reflection surface 34. The invention is not limited thereto, and the incident surface 33 and the reflection surface 34 may be configured reversely. A laminated film of the reflection layer 35 and the absorption layer 36 is provided on the reflection surface 34 as in the embodiment. In this case, the operation of the aerial display apparatus 1 described in the embodiment is also reversed in the horizontal direction.

In each of the embodiments described above, the liquid crystal display device is described as an example of the display device 20, but the display device 20 is not limited to this. As the display device 20, a self-luminous organic electroluminescence (EL) display device, a micro-light-emitting diode (microLED) display device, or the like can be used. In the microLED display device, light in red (R), green (G), and blue (B) that constitutes a pixel is respectively emitted by an LED. In a case where the self-luminous display device 20 is used, the lighting device 10 is not necessary.

The present invention is not limited to the above embodiments, and various modifications can be made without departing from the gist of the present invention at an implementation stage. In addition, the embodiments may be appropriately combined with each other, and in such a case, combined effects can be attained. Furthermore, various inventions are included in the above-described embodiments, and various inventions can be extracted by combining selected ones of the disclosed structural components. Even if some structural components are omitted from the structural components shown in the embodiment, the configuration without these structural components can be extracted as an invention if the problem can be solved and the effects can be attained.

REFERENCE SIGNS LIST

| | |
|---|---|
| 1 | Aerial display apparatus |
| 2 | Aerial image |
| 3 | Viewer |
| 10 | Lighting device |
| 11 | Light source unit |
| 12 | Light guide plate |
| 13 | Reflective sheet |
| 20 | Display device |
| 30 | Optical Device |
| 31 | Base member |
| 32 | Optical element |
| 33 | Incident surface |
| 34 | Reflection surface |
| 35 | Reflection layer |
| 36 | Absorption layer |
| 36A | Black paint |
| 37 | Hydrophilic layer |
| 38 | Hydrophobic layer |
| 60 | Control unit |
| 60A | Display processing unit |
| 60B | Information processing unit |
| 61 | Storage unit |
| 62 | Input/output interface |
| 63 | Display unit |
| 64 | Input unit |
| 65 | Bus |

**Claims**

1. An optical device for an aerial display apparatus that forms an aerial image in an aerial space, the optical device comprising:

a planar base member;
a plurality of optical elements provided below the base member, each extending in a first direction and aligned in a second direction orthogonal to the first direction;
a reflection layer provided in each of the optical elements and configured to reflect light; and

an absorption layer provided on the reflection layer and configured to absorb light,
wherein each of the optical elements has an incident surface and a reflection surface which are inclined with respect to a normal direction of the base member and are in contact with each other,
the reflection layer is provided on the reflection surface, and
the optical device is arranged in such a manner as to receive external light on the incident surface.

2. The optical device according to claim 1, wherein the reflection layer is formed of aluminum (Al), silver (Ag), or an alloy containing one of them.

3. The optical device according to claim 1, wherein the absorption layer is formed of a material containing a black dye or pigment, a material containing carbon black, or a material containing graphite.

4. An aerial display apparatus comprising:

    a display device configured to display an image; and
    the optical device according to claim 1 arranged to receive light from the display device on the incident surface.

5. The aerial display apparatus according to claim 4, wherein the display device and the optical device are arranged in parallel to each other.

6. The aerial display apparatus according to claim 4, further comprising:

    a lighting device configured to produce light,
    wherein the display device is arranged to receive light from the lighting device and is configured by a liquid crystal display device.

FIG.1

EP 4 502 711 A1

FIG. 2

FIG. 3

F I G. 4

30

F I G. 5

F I G. 6

F I G. 7

F I G. 8

FIG. 9

F I G. 10

F I G. 11

F I G. 12

Oblique vapor deposition

33  35  34

32
30A
31

F I G. 13

Oblique vapor deposition

33  36  35  34

32
30A
31

F I G. 14

Oblique vapor deposition

33    35
        34

32
}
30A
31

F I G. 15

Oblique vapor deposition

33    37
        35
        34

32
}
30A
31

F I G. 16

Oblique vapor deposition

38 · 37 · 35 · 34 · 33 · 32 · 30A · 31

# F I G. 17

Coating · 36A

33 · 38 · 37 · 35 · 34 · 32 · 30A · 31

# F I G. 18

Drying

F I G. 19

F I G. 20

F I G. 21

## INTERNATIONAL SEARCH REPORT

| | International application No. |
|---|---|
| | **PCT/JP2023/005798** |

**A. CLASSIFICATION OF SUBJECT MATTER**

*G02B 30/56*(2020.01)i; *G02B 5/00*(2006.01)i; *G02B 5/04*(2006.01)i; *G02B 5/08*(2006.01)i
FI:   G02B30/56; G02B5/00 Z; G02B5/04 A; G02B5/08 A

According to International Patent Classification (IPC) or to both national classification and IPC

**B. FIELDS SEARCHED**

Minimum documentation searched (classification system followed by classification symbols)

G02B30/56; G02B5/00; G02B5/04; G02B5/08; H04N13/00-13/398; G03B35/00-35/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/177271 A1 (TOPPAN PRINTING CO LTD) 10 September 2021 (2021-09-10) entire text, all drawings | 1-6 |
| A | JP 2019-032404 A (KONICA MINOLTA INC) 28 February 2019 (2019-02-28) entire text, all drawings | 1-6 |
| A | WO 2017/018204 A1 (SONY CORP) 02 February 2017 (2017-02-02) entire text, all drawings | 1-6 |
| A | WO 2019/155647 A1 (ASUKANET CO LTD) 15 August 2019 (2019-08-15) entire text, all drawings | 1-6 |
| A | US 2017/0017089 A1 (LG ELECTRONICS INC.) 19 January 2017 (2017-01-19) entire text, all drawings | 1-6 |
| A | JP 2019-105726 A (KONICA MINOLTA INC) 27 June 2019 (2019-06-27) entire text, all drawings | 1-6 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 March 2023** | **11 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/005798**

| Patent document cited in search report | | | Publication date (day/month/year) | Patent family member(s) | | | Publication date (day/month/year) |
|---|---|---|---|---|---|---|---|
| WO | 2021/177271 | A1 | 10 September 2021 | CN | 115280222 | A | |
| | | | | TW | 202138882 | A | |
| JP | 2019-032404 | A | 28 February 2019 | (Family: none) | | | |
| WO | 2017/018204 | A1 | 02 February 2017 | US entire text, all drawings | 2018/0203244 | A1 | |
| | | | | CN | 107850701 | A | |
| WO | 2019/155647 | A1 | 15 August 2019 | JP | 2021-81451 | A | |
| US | 2017/0017089 | A1 | 19 January 2017 | EP entire text, all drawings | 3118664 | A1 | |
| | | | | CN | 106353844 | A | |
| JP | 2019-105726 | A | 27 June 2019 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011191404 A
- JP 2011175297 A